# EUROPÄISCHE PATENTANMELDUNG

(11) **EP 3 382 629 A1**
(43) Veröffentlichungstag der Anmeldung: **03.10.2018**
(21) Anmeldenummer: 17164202.8
(22) Anmeldetag: 31.03.2017
(51) Int. Cl.: G06Q 20/38

(54) **VERFAHREN UND ZEITGEBER ZUM BEREITSTELLEN VON SICHERHEITSGESCHÜTZTEN ZEITANGABEN**

(71) Anmelder: Siemens Aktiengesellschaft, 80333 München (DE)
(72) Erfinder: Falk, Rainer, 85586 Poing (DE)

(57) **Zusammenfassung**

Die Erfindung realisiert ein Verfahren zum rechnergestützten Bereitstellen von sicherheitsgeschützten Zeitangaben mit den Verfahrensschritten: Erfassen von ersten Zeitangaben von einer oder mehrerer Zeitquellen. Speichern von Transaktionen, wobei die Transaktionen die ersten Zeitangaben umfassen und/oder erste Prüfsummen für die ersten Zeitangaben berechnet werden und die Transaktionen die ersten Prüfsummen umfassen. Erstellen der sicherheitsgeschützten Zeitangaben durch ein Erzeugen von Gliedern einer Blockkette, wobei die Glieder jeweils mindestens eine der Transaktionen umfassen und die Glieder miteinander zu der Blockkette verkettet werden.

## Beschreibung

Die Erfindung bezieht sich auf ein Verfahren und einen Zeitgeber zum rechnergestützten Bereitstellen von sicherheitsgeschützten Zeitangaben.

Die Technologie von Blockketten (engl. Blockchains) bzw. "Distributed Ledgers" ist aktuell ein intensiv diskutierte Technologie. Neben Anwendungen für dezentrale Bezahlsysteme (z.B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Eine Aufgabe der vorliegenden Erfindung ist es, ein Verfahren und einen Zeitgeber zum rechnergestützten Bereitstellen von sicherheitsgeschützten Zeitangaben bereitzustellen.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß eines ersten Aspekts betrifft die Erfindung ein Verfahren zum rechnergestützten Bereitstellen von sicherheitsgeschützten Zeitangaben mit folgenden Verfahrensschritten:
- Erfassen (110) von ersten Zeitangaben von einer oder mehreren Zeitquellen;
- Speichern (120) von Transaktionen, wobei
   - die Transaktionen die ersten Zeitangaben umfassen und/oder
   - erste Prüfsummen für die ersten Zeitangaben berechnet werden und die Transaktionen die ersten Prüfsummen umfassen;
- Erstellen (130) der sicherheitsgeschützten Zeitangaben durch ein Erzeugen von Gliedern einer Blockkette, wobei
   - die Glieder jeweils mindestens eine der Transaktionen umfassen,
   - die Glieder miteinander zu der Blockkette verkettet werden.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter "Bereitstellen" kann im Zusammenhang mit der Erfindung beispielsweise ein Laden oder ein Speichern, beispielsweise der ersten Zeitangabe und/oder der sicherheitsgeschützten Zeitangabe, auf oder von einem Speichermodul verstanden werden.

Unter einer "Prüfsumme", beispielsweise die erste Prüfsumme, eine Knoten-Prüfsumme, eine Transaktions-Prüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine der Transaktionen und/oder einem Glied-Header gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden.

Unter einer "ersten Prüfsumme" kann im Zusammenhang mit der Erfindung eine Prüfsumme verstanden werden, die beispielsweise über die Daten(sätze) einer Transaktion berechnet wird. Anstelle der Daten, z. B. der ausgewählte Teil der Daten, kann beispielsweise eine Transaktion nur die Prüfsumme - genauer die entsprechende zugehörige erste Prüfsumme - für diese Daten umfassen. Die entsprechenden Daten können beispielsweise dann in einer weiteren Transaktion eines weiteren Gliedes bereitgestellt werden. Es ist beispielsweise aber auch denkbar, dass diese Daten über einen anderen Kommunikationskanal bereitgestellt werden. Ein Knoten kann dann beispielsweise die Integrität/Authentizität der Daten mittels der ersten Prüfsumme aus der Blockkette prüfen. Auch kann beispielsweise zusätzlich zu der ersten Prüfsumme eine Zusatzdatensatz in den Transaktionen abgelegt sein, der insbesondere einen Speicherort angibt, wo die Daten abgerufen werden können. Das ist insbesondere dahingehend vorteilhaft, um eine Datengröße der Blockkette möglichst gering zu halten. Zusätzlich kann beispielsweise eine Berechnung einer Transaktions-Prüfsumme beschleunigt werden, da hier bereits Prüfsummen vorliegen und diese gleich als Blätter z. B. eines Merkle-Baumes verwendet werden können. Dabei kann insbesondere darauf verzichtet werden, eine separate Prüfsumme über den Zusatzdatensatz zu bilden.

Unter "Transaktions-Prüfsumme" kann im Zusammenhang mit der Erfindung eine Prüfsumme verstanden werden, die insbesondere über die jeweiligen Transaktionen eines der jeweiligen Glieder und/oder vorhergehende Glied/Vorgänger-Glied eines Gliedes der Blockkette gebildet werden. Zusätzlich oder alternativ kann die Transaktions-Prüfsumme insbesondere auch über Transaktionen eines vorhergehenden Gliedes/Vorgänger-Gliedes des Gliedes gebildet worden sein. Die Transaktions-Prüfsumme kann dabei insbesondere auch mittels eines Hash-Baumes, beispielsweise einem Merkle Baum [1] oder einem Patricia-Baum, realisiert werden, wobei die Transaktions-Prüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert, wobei insbesondere die weiteren Prüfsummen Blätter im Merkle-Baum bzw. Patricia-Baum sind. Die Transaktions-Prüfsumme kann damit beispielsweise die Transaktionen absichern, indem die Wurzel-Prüfsumme aus den weiteren Prüfsummen gebildet wird. Die Transaktions-Prüfsumme kann insbesondere für Transaktionen eines ersten Gliedes der Glieder berechnet werden. Insbesondere kann eine solche Transaktions-Prüfsumme in ein nachfolgendes Glied des ersten Gliedes eingehen, um dieses nachfolgende Glied beispielsweise mit ihren vorhergehenden Gliedern (z. B. das erste Glied) zu verketten und insbesondere damit eine Integrität der Blockkette prüfbar zu machen.

Unter einer "Verkettungsprüfsumme" kann im Zusammenhang mit der Erfindung eine Prüfsumme verstanden werden, die insbesondere für ein jeweiliges Glied der Blockkette das vorhergehende Glied der Blockkette angibt bzw. referenziert (in der Fachsprache insbesondere häufig als "previous block hash" bezeichnet) [1]. Als Verkettungsprüfsumme kann beispielsweise die Transaktions-Prüfsumme eines Gliedes verwendet werden, um ein neues Glied mit einem Glied der Blockkette zu verketten. Es ist beispielsweise aber auch möglich, dass eine Prüfsumme über einen Header des vorhergehenden Gliedes oder über das gesamte vorhergehende Glied gebildet wird und als Verkettungsprüfsumme verwendet wird. Ein jeweiliges Glied der Blockkette umfasst vorzugsweise jeweils eine Verkettungsprüfsumme, die für ein vorhergehendes Glied des jeweiligen Gliedes berechnet wurde.

Unter "Verketten der/von Gliedern einer Blockkette" kann im Zusammenhang mit der Erfindung beispielsweise verstanden werden, dass Glieder jeweils eine Information (z. B. Verkettungsprüfsumme) umfassen, die auf ein anderes Glied oder mehrere andere Glieder der Blockkette verweisen bzw. diese referenzieren [1].

Unter "Einfügen in die Blockkette" und dergleichen kann im Zusammenhang mit der Erfindung beispielsweise verstanden werden, dass insbesondere eine Transaktion bzw. die Transaktionen oder ein Glied mit seinen Transaktionen an einen oder mehrere Knoten einer Blockkette übermittelt werden. Werden diese Transaktionen beispielsweise erfolgreich validiert (z. B. durch den/die Knoten), werden diese Transaktionen insbesondere als neues Glied/er mit mindestens einem vorhandenen Glied der Blockkette verkettet [1]. Insbesondere kann dieses Validieren und/oder Verketten durch einen vertrauenswürdigen Knoten (z. B. einem Mining Node oder einer Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Glied hinterlegen, um insbesondere eine Identifizierbarkeit des Erstellers des Gliedes zu ermöglichen und/oder eine Identifizierbarkeit des Knotens zu ermöglichen. Dabei gibt diese Knoten-Prüfsumme an, welcher Knoten beispielsweise das entsprechende Glied mit mindestens einem anderen Glied der Blockkette verkettet hat.

Unter "Transaktion" bzw. "Transaktionen" können im Zusammenhang mit der Erfindung beispielsweise ein Smart-Contract, eine Datenstruktur oder ein Transaktionsdatensatz verstanden werden, der insbesondere jeweils eine der Transaktionen oder mehrere Transkationen umfasst. Unter "Transaktion" bzw. "Transaktionen" können im Zusammenhang mit der Erfindung beispielsweise auch die Daten einer Transaktion eines Gliedes einer Bockkette (engl. Blockchain) verstanden werden. Ein Transaktionsdatensatz bzw. eine Transkation kann einen Programmcode umfassen, der insbesondere einen Smart Contract realisiert. Unter einem "Transaktionsdatensatz" können im Zusammenhang mit der Erfindung beispielsweise auch eine Transkation eines Gliedes einer Blockkette verstanden werden. Beispielsweise können im Zusammenhang mit der Erfindung unter Transaktion auch eine Echtzeit-Bestätigungs-Transkation und/oder eine Zeitsynchronisations-Transaktion (TimeSync-Transaction) verstanden werden.

Unter einem "Programmcode" können im Zusammenhang mit der Erfindung beispielsweise Steuerungsbefehle, Programmbefehle, oder Steuerungsanweisungen verstanden werden, die insbesondere in einer Transaktion gespeichert sind.

Unter einem "Smart Contract" kann im Zusammenhang mit der Erfindung beispielsweise ein ausführbarer Programmcode verstanden werden. Der Programmcode ist insbesondere auf einer virtuellen Maschine ausführbar.

Unter "Speichern von Transaktionen" kann im Zusammenhang mit der Erfindung beispielsweise ein Speichern von Daten (z. B. Zeitangaben, Zusatzinformationen usw.) in einer Transaktion bzw. in einem Transaktionsdatensatz verstanden werden. Es ist beispielsweise auch denkbar, dass nicht die Daten direkt gespeichert werden, sondern nur eine Prüfsumme (z. B. die erste Prüfsumme) der entsprechenden Daten in der Transaktion gespeichert werden.

Unter "Proof-of-Work-Nachweis" kann im Zusammenhang mit der Erfindung beispielsweise ein Lösen einer rechenintensiven Aufgabe verstanden werden, die insbesondere abhängig vom Glied-Inhalt/Inhalt eines ersten Transaktionsdatensatzes zu lösen ist [1]. Eine solche rechenintensive Aufgabe wird beispielsweise auch als kryptographisches Puzzle bezeichnet.

Unter "Glied" kann im Zusammenhang mit der Erfindung beispielsweise ein Block einer Blockkette verstanden werden, die insbesondere als Datenstruktur realisiert ist und vorzugsweise jeweils eine der Transaktionen oder mehrere der Transaktionen umfasst. Ein Glied kann beispielsweise Angaben zur Größe (Datengröße in Byte) des Gliedes, einen Glied-Header (engl. Blockheader), einen Transaktionszähler und eine oder mehrere Transaktionen umfassen [1]. Der Glied-Header kann beispielsweise eine Version, eine Verkettungsprüfsumme, eine Transkations-Prüfsumme, einen Zeitstempel, einen Proof-of-Work Nachweis und eine Nonce (Einmalwert, Zufallswert oder Zähler der für den Proof-of-Work Nachweis verwendet wird) umfassen [1].

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehender Glieder eines (ersten) Gliedes der Blockkette" kann im Zusammenhang mit der Erfindung beispielsweise nur das Glied der Blockkette verstanden werden, das insbesondere einem (ersten) Glied direkt vorhergeht. Alternativ können unter "vorhergehender Glieder eines (ersten) Gliedes der Blockkette" insbesondere auch alle Glieder der Blockkette verstanden werden, die dem ersten Glied vorhergehen. Hierdurch kann beispielsweise die Verkettungsprüfsumme oder die Transaktions-Prüfsumme insbesondere nur über das dem ersten Glied direkt vorhergehende Glied (bzw. deren Transaktionen) oder über alle dem ersten Glied vorhergehenden Glieder (bzw. deren Transaktionen) gebildet werden.

Unter einem "Blockketten-Knoten", "Knoten", "Knoten einer Blockkette" und dergleichen, können im Zusammenhang mit der Erfindung beispielsweise Geräte (z. B. Feldgeräte), Rechner, Smart-Phones, Clients oder Teilnehmer verstanden werden, die Operationen mit einer Blockkette durchführen [1]. Solche Knoten können beispielsweise Transaktionen einer Blockkette bzw. deren Glieder ausführen oder neue Glieder mit neuen Transaktionen in die Blockkette mittels neuer Glieder einfügen bzw. verketten. Insbesondere kann dieses Validieren und/oder Verketten durch einen vertrauenswürdigen Knoten (z. B. einem Mining Node) oder ausschließlich durch vertrauenswürdige Knoten erfolgen. Bei einem vertrauenswürdigen Knoten handelt es sich beispielsweise um einen Knoten der über zusätzliche Sicherheitsmaßnahmen verfügt (z. B. Firewalls, Zugangsbeschränkungen zum Knoten oder ähnliches) handeln, um eine Manipulation des Knotens zu verhindern. Alternativ oder zusätzlich kann beispielsweise ein vertrauenswürdiger Knoten beim Verketten eines neuen Gliedes mit der Blockkette, eine zweite Prüfsumme (z. B. eine digitale Signatur oder ein Zertifikat) in dem neuen Glied speichern. Damit kann insbesondere ein Nachweis bereitgestellt werden, der angibt, dass das Glied von einem bestimmten Knoten eingefügt wurde bzw. seine Herkunft angibt.

Unter einem "Rechner" kann im Zusammenhang mit der Erfindung beispielsweise ein Computer(system), ein Client, ein Smart-Phone, ein Gerät oder ein Server, die jeweils außerhalb der Blockkette angeordnet sind bzw. kein Teilnehmer der Blockkette sind (also keine Operationen mit der Blockkette durchführen oder diese nur abfragen, ohne jedoch Transaktionen durchzuführen, Glieder einfügen oder Proof-of-Work-Nachweise berechnen), verstanden werden. Alternativ kann insbesondere auch unter einem Rechner ein Knoten einer Blockkette verstanden werden.

Unter "Zeitangabe/n" können im Zusammenhang mit der Erfindung beispielsweise ein Zeitstempel, eine Zeitsynchronisationsinformation, eine (aktuelle) Uhrzeit oder irgendwie anders geartete Zeitinformation verstanden werden. Bei den Zeitangaben handelt es sich insbesondere um die Daten, die eine jeweilige Transaktion umfasst.

Unter "Zusatztransaktion" können im Zusammenhang mit der Erfindung beispielsweise Transaktionen verstanden werden, die insbesondere eine Zusatzinformation umfassen, jedoch vorzugsweise keine Zeitangabe umfassen. Diese Zusatztransaktionen können beispielsweise mittels eines neuen Gliedes (beispielsweise umfasst das neue Glied die Zusatztransaktion) in die Blockkette eingefügt werden und bei einer erfolgreichen Validierung (auch beispielsweise Bestätigung genannt) der Zusatztransaktion das neue Glied mit der Blockkette verkettet werden.

Unter "Zusatzinformation" kann im Zusammenhang mit der Erfindung beispielsweise eine Information verstanden werden, die zusammen mit der Zeitangabe beispielsweise in einer Transaktion eines entsprechenden Gliedes gespeichert ist. Alternativ kann beispielsweise in einer weiteren Transaktion des entsprechenden Gliedes die Zusatzinformation abgelegt sein. In einer weiteren Alternative kann beispielsweise die Zusatzinformation mittels Zusatztransaktion in die Blockkette eingefügt werden.

Das Verfahren ist dahingehend vorteilhaft um insbesondere durch eine dezentrale Blockketten-Infrastruktur eine vertrauenswürdige Zeitinformation bzw. Zeitangabe bereitzustellen. Die Erfindung erlaubt es beispielsweise eine dezentrale Blockkette zu verwenden, um eine verlässliche Zeitangabe bereitzustellen. Diese kann beispielsweise gleichermaßen innerhalb der Blockkette durch Smart-Contracts und außerhalb der Blockkette durch Rechner oder Client verwendet werden.

Bei einer ersten Ausführungsform des Verfahrens werden die Glieder über eine kryptographische Hashfunktion miteinander verkettet.

Bei einer weiteren Ausführungsform des Verfahrens ist die eine oder die mehreren Zeitquellen eine GPS-Zeitquelle und/oder eine Galileo-Zeitquelle und/oder Glonass-Zeitquelle und/oder Beidou-Zeitquelle und/oder DCF77-Zeitquelle und/oder Atomic Clock-Zeitquelle und vorzugsweise umfasst zumindest ein Teil der Transaktionen oder Zusatztransaktionen eine erste Zusatzinformation über die Zeitquelle.

Das Verfahren ist dahingehend vorteilhaft um insbesondere durch die mehreren Zeitquellen (auch Uhren genannt) eine möglichst genaue Zeitangabe bereitzustellen.

Bei einer weiteren Ausführungsform des Verfahrens umfassen zumindest ein Teil der Transaktionen oder Zusatztransaktionen jeweils eine zweite Zusatzinformation, die einen Typ der Zeitquelle angeben.

Das Verfahren ist dahingehend vorteilhaft um insbesondere die Informationen über die technische Realisierung bzw. den Typ der verwendeten Zeitquelle/n (z. B. Temperatur-kompensierter Quarzoszillator, Chip-Scale Atomic Clock CSAC, reguläre Atomuhr, die Art einer Atomuhr, z.B. Rubidium-Uhr , Iridium-Uhr, Cäsium-Uhr oder Wasserstoff-Maser-Uhr), eine Genauigkeitsinformation (z. B. absolut, z.B. +/- 1 Sekunde, Ganggenauigkeit, z.B. 0,01s/24h) bereitzustellen.

Bei einer weiteren Ausführungsform des Verfahrens umfassen zumindest ein Teil der Transaktionen oder Zusatztransaktionen jeweils eine dritte Zusatzinformation, die eine Genauigkeit der sicherheitsgeschützten Zeitangaben angeben.

Das Verfahren ist dahingehend vorteilhaft um insbesondere sicherheitsgeschützt eine Information darüber bereitzustellen, wie präzise die jeweilige Zeitangabe ist.

Bei einer weiteren Ausführungsform des Verfahrens umfassen zumindest ein Teil der Transaktionen oder Zusatztransaktionen jeweils eine vierte Zusatzinformation, die ein Zeitsystem der sicherheitsgeschützen Zeitangaben angeben.

Das Verfahren ist dahingehend vorteilhaft um insbesondere sicherheitsgeschützt eine Information darüber bereitzustellen, welches Zeitsystem (z.B. UTC, GPS System Time, Galileo System Time) verwendet wird.

Bei einer weiteren Ausführungsform des Verfahrens wird eine erste Zeitdauer ermittelt, die angibt mit welcher Verzögerung die sicherheitsgeschützten Zeitangaben in die Blockkette eingefügt werden, wobei zumindest ein Teil der Transaktionen oder Zusatztransaktionen jeweils die erste Zeitdauer als fünfte Zusatzinformation umfassen.

Das Verfahren ist dahingehend vorteilhaft um insbesondere sicherheitsgeschützt eine Information darüber bereitzustellen, wie lange es dauert bis eine Zeitangabe mit der Blockkette verkettet ist. Hierzu prüft vorzugsweise ein Zeitgeber (z. B. eine Primär-Zeitgeber) nach, mit welcher Verzögerung ein Glied in die Blockkette eingefügt wird. Dies kann beispielsweise über eine spezielle Transaktion erreicht werden, z. B. eine Realtime Assertion Transaktion. Insbesondere kann eine solche Realtime Assertion Transaktion eine Zeitangabe enthalten, die beispielsweise angibt wie lange es dauert bis die Transkation erfolgreich validiert ist und mittels eines Gliedes in die Blockkette eingefügt wird. Abhängig von der ermittelten Verzögerung wird die fünfte Zusatzinformation bereitgestellt (z.B. Mittelwert/Erwartungswert der Verzögerung, Varianz der Verzögerung).

Bei einer weiteren Ausführungsform des Verfahrens wird anhand eines vorgegebenen zeitlichen Intervalls, vorgegebenen Zeitrasters oder durch einen Trigger jeweils eine der sicherheitsgeschützten Zeitangaben als jeweils eine der Transaktionen in jeweils eines der Glieder in die Blockkette eingefügt.

Das Verfahren ist dahingehend vorteilhaft um insbesondere eine Zeitangabe innerhalb eines vorgegebenen Intervalls bereitzustellen, zu den vorgegebenen Zeitpunkten eines Zeitrasters bereitzustellen oder durch einen Trigger (z. B. eine spezifische Anfrage durch einen Rechner oder einen Knoten). Der Trigger selbst kann beispielsweise durch ein Starten eines Rechners ausgelöst werden, der während eines Startvorgangs seine interne Uhr synchronisieren möchte. Hierzu kann er mittels einer Transaktion über die Blockkette oder über einen anderen Kommunikationskanal den Trigger beispielsweise dem Zeitgeber bereitstellen. Ist insbesondere der Trigger bzw. die entsprechende Transaktion erfolgreich validiert, stellt der Zeitgeber beispielsweise mit dem erfindungsgemäßen Verfahren eine Zeitangabe bereit.

Bei einer weiteren Ausführungsform des Verfahrens werden die Glieder an mindestens einen Rechner übertragen oder von einem Rechner abgerufen.

Das Verfahren ist dahingehend vorteilhaft, um insbesondere sicherheitsgeschützte Zeitangaben einem Rechner (z. B. ein Knoten oder ein Rechner außerhalb einer Blockkette) bereitzustellen. Das Abrufen/Übertragen kann beispielsweise verbindungsorientiert (z. B. TCP/IP-basierend), verbindungslos (z. B. UDP-basierend) oder broadcast/multicast-basierend erfolgen.

Bei einer weiteren Ausführungsform des Verfahrens synchronisiert der mindestens eine Rechner seine lokale Zeitinformation, lokale Zeitangabe oder lokale Uhr anhand sicherheitsgeschützten Zeitangaben der Blockkette.

Das Verfahren ist dahingehend vorteilhaft um insbesondere die interne Uhr des Rechners mittels einer sicherheitsgeschützten Zeitangabe zu synchronisieren.

Bei einer weiteren Ausführungsform des Verfahrens werden die sicherheitsgeschützten Zeitangaben durch einen oder mehrere Zeitgeber bereitgestellt.

Das Verfahren ist dahingehend vorteilhaft um insbesondere die sicherheitsgeschützten Zeitangaben durch einen Knoten, der beispielsweise vertrauenswürdig ist, bereitzustellen. Sind insbesondere mehrere Zeitgeber vorgesehen, so kann beispielsweise eine erhöhte Zuverlässigkeit aufgrund einer Redundanz der Zeitgeber erreicht werden.

Gemäß eines weiteren Aspekts betrifft die Erfindung ein Verfahren zum Synchronisieren einer Uhr eines Rechners mit dem Verfahrensschritten:
- Empfangen oder Abrufen mindestens einer sicherheitsgeschützten Zeitangabe nach einem der Ansprüche 1-11 (dem erfindungsgemäßen Verfahren zum rechnergestützten Bereitstellen von sicherheitsgeschützten Zeitangaben oder eine seiner Ausführungsformen), wobei das Glied einer Blockkette eine Transaktion umfasst, welche die sicherheitsgeschützte Zeitangabe aufweist;
- Einstellen der Uhr anhand der sicherheitsgeschützten Zeitangabe.

Das Verfahren ist dahingehend vorteilhaft um insbesondere einen Rechner, beispielsweise einen Knoten (z. B. ein blockkettenbasierter Zeitserver/Zeitgeber) der Blockkette oder einen Rechner (z. B. Client, Server, Zeitserver) außerhalb der Blockkette durch Rechner oder Client verwendet werden.

Gemäß eines weiteren Aspekts betrifft die Erfindung einen Zeitgeber zum rechnergestützten Bereitstellen sicherheitsgeschützter Zeitangaben aufweisend:
- eine oder mehrere Zeitquellen;
- ein Erfassungsmodul zum Erfassen von ersten Zeitangaben von der einen oder den mehreren Zeitquellen;
- ein Speichermodul zum Speichern von Transaktionen, wobei
   - die Transaktionen die ersten Zeitangaben umfassen und/oder
   - erste Prüfsummen für erste Zeitangaben berechnet werden und die Transaktionen die ersten Prüfsummen umfassen;
- ein Erstellungsmodul zum Erstellen der sicherheitsgeschützten Zeitangaben durch ein Erzeugen von Gliedern einer Blockkette, wobei
   - die Glieder jeweils mindestens eine der Transaktionen umfassen,
   - die Glieder miteinander zu der Blockkette verkettet werden.

Bei einer weiteren Ausführungsform des Zeitgebers umfasst der Zeitgeber ein Übermittlungsmodul zum Übermitteln sicherheitsgeschützter Zeitangaben.

Das Verfahren ist dahingehend vorteilhaft, um insbesondere die sicherheitsgeschützte Zeitangabe an Knoten oder Rechner außerhalb der Blockkette zu übermitteln oder die sicherheitsgeschützten Zeitangaben von einem Zeitgeber oder Knoten abzufragen. Das Übermitteln kann beispielsweise verbindungsorientiert (z. B. TCP/IP basierend), verbindungslos (z. B. UDP basierend) oder broadcast/multicast-basierend erfolgen.

Bei einer weiteren Ausführungsform des Zeitgebers umfasst der Zeitgeber zumindest ein weiteres Modul oder mehrere weitere Module zur Durchführung des erfindungsgemäßen Verfahrens (oder einer seiner Ausführungsformen) zum rechnergestützten Bereitstellen sicherheitsgeschützter Zeitangaben.

Gemäß eines weiteren Aspekts betrifft die Erfindung eine Vorrichtung zum Synchronisieren einer Uhr eines Knotens aufweisend:
- ein Kommunikationsmodul zum Empfangen oder Abrufen mindestens einer sicherheitsgeschützten Zeitangabe nach einem der Ansprüche 1-11(dem erfindungsgemäßen Verfahren zum rechnergestützten Bereitstellen von sicherheitsgeschützten Zeitangaben oder eine seiner Ausführungsformen), wobei das Glied einer Blockkette eine Transaktion umfasst, welche die sicherheitsgeschützte Zeitangabe aufweist;
- ein Konfigurationsmodul zum Einstellen der Uhr anhand der sicherheitsgeschützten Zeitangabe.

Bei einer weiteren Ausführungsform der Vorrichtung umfasst die Vorrichtung zumindest ein weiteres Modul oder mehrere weitere Module zur Durchführung des erfindungsgemäßen Verfahrens (oder einer seiner Ausführungsformen) zum rechnergestützten Synchronisieren einer Uhr eines Knotens.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Vorrichtung und/oder den Zeitgeber erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Vorrichtung und/oder den Zeitgeber erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm;
- Fig. 2: ein zweites Ausführungsbeispiel der Erfindung als ein Ablaufdiagramm;
- Fig. 3: ein drittes Ausführungsbeispiel der Erfindung;
- Fig. 4: ein viertes Ausführungsbeispiel der Erfindung;
- Fig. 5: ein fünftes Ausführungsbeispiel der Erfindung;
- Fig. 6: ein sechstes Ausführungsbeispiel der Erfindung als Zeitgeber;
- Fig. 7: ein siebtes Ausführungsbeispiel der Erfindung als Vorrichtung;

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen. Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

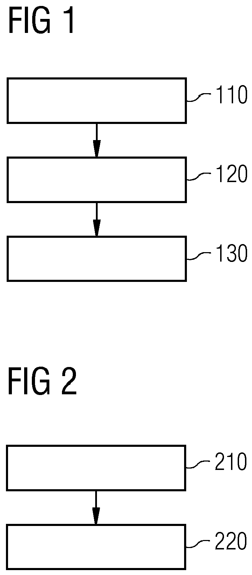

Die Fig. 1 zeigt ein erstes Ausführungsbeispiel der Erfindung als ein Ablaufdiagramm des erfindungsgemäßen Verfahrens zum rechnergestützten Bereitstellen von sicherheitsgeschützten Zeitangaben.

Das Verfahren ist vorzugsweise rechnergestützt realisiert.

Im Einzelnen wird in diesem Ausführungsbeispiel ein Verfahren zum rechnergestützten Bereitstellen von sicherheitsgeschützten Zeitangaben realisiert.

Das Verfahren umfasst einen ersten Verfahrensschritt zum Erfassen 110 von ersten Zeitangaben von einer oder mehrerer Zeitquellen. Hier kann beispielsweise ein Zeitgeber, der das Verfahren realisiert, seine lokale Zeitquelle (z.B. Temperatur-kompensierter Quarzoszillator, Chip-Scale Atomic Clock CSAC, reguläre Atomuhr) abfragen.

Das Verfahren umfasst einen zweiten Verfahrensschritt zum Speichern 120 von Transaktionen. Die Transaktionen umfassen dabei die ersten Zeitangaben, wobei dies auf unterschiedliche Weise realisiert werden kann. Es ist denkbar, dass jeweils eine der Transaktionen eine oder mehrere der Zeitangaben umfasst - also in der entsprechenden Transaktion gespeichert wird. Alternativ können die Transaktionen erste Prüfsummen umfassen, die für die ersten Zeitangaben berechnet wurden. In dieser Variante umfasst eine der Transaktionen eine oder mehrere erste Prüfsummen die jeweils für eine Zeitangabe berechnet wurden. Zusätzlich zur den ersten Prüfsummen können die Transaktionen beispielsweise eine Angabe (z. B. eine Internetadresse oder einen Speicherort auf einem Datenträger) umfassen, wo ein Rechner oder ein Knoten die entsprechenden Zeitangaben abrufen kann. Es ist beispielsweise auch denkbar, dass diese Angabe Rechnern und Knoten allgemein bekannt gemacht wird (z. B. über eine Rechnerkonfiguration oder Nutzerprofile).

Das Verfahren umfasst einen dritten Verfahrensschritt zum Erstellen 130 der sicherheitsgeschützten Zeitangaben durch ein Erzeugen von Gliedern einer Blockkette, wobei die Glieder jeweils mindestens eine der Transaktionen umfassen und die Glieder miteinander zu der Blockkette verkettet werden.

Hierdurch kann beispielsweise der Zeitgeber die Transaktionen mit den Zeitangaben in die Blockkette einfügen bzw. die entsprechenden Glieder mit der/den Transaktionen mit mindestens einem Glied der Blockkette verketten.

Die Fig. 2 zeigt ein erstes Ausführungsbeispiel der Erfindung als ein Ablaufdiagramm des erfindungsgemäßen Verfahrens zum Synchronisieren einer Uhr eines Rechners.

Das Verfahren ist vorzugsweise rechnergestützt realisiert.

Im Einzelnen umfasst das Verfahren einen ersten Verfahrensschritt zum Empfangen 210 oder Abrufen mindestens einer erfindungsgemäßen sicherheitsgeschützten Zeitangabe, so wie diese in den Ansprüchen bzw. der Ausführungsformen des Verfahrens zum Bereitstellen der sicherheitsgeschützten Zeitangabe erläutert wurde (z. B. Ausführungsbeispiel zu Fig. 1). Entsprechend empfängt der Rechner bzw. ruft der Rechner diese Informationen von einer Blockkette ab, wobei insbesondere das Glied einer Blockkette eine Transaktion umfasst, welche die sicherheitsgeschützte Zeitangabe aufweist.

In einem zweiten Verfahrensschritt 220 wird die Uhr des Rechners anhand der sicherheitsgeschützten Zeitangabe eingestellt.

Mit anderen Worten, wird insbesondere in der Fig. 1 und der Fig. 2 eine vertrauenswürdige blockkettenbasierte Zeitquelle vorgeschlagen, die eine Zeitinformation/en bzw. eine Zeitangabe/n in einer Blockkette in Form einer Blockketten-Transaktion bereitgestellt. Die Erfindung realisiert insbesondere eine Möglichkeit, eine dezentrale Blockkette zu verwenden, um eine verlässliche/vertrauenswürdige Zeitangabe/n bereitzustellen. Diese kann insbesondere gleichermaßen innerhalb der Blockkette durch Smart Contracts und außerhalb der Blockkette verwendet werden.

In einer Variante werden eine oder mehrere Zeitquellen verwendet (z. B. GPS, Galileo, Glonass, Beidou, DCF77, Atomic Clock) und abhängig von der aktuellen Zeitinformation (z. B. erste Zeitangabe) eine Transaktion in die Blockkette einstellt. Auf diese Weise lässt sich insbesondere ein Zeitgeber oder ein Primär-Zeitgeber (auch "Blockchain-Masterclock" genannt) realisieren, die insbesondere eine Masterclock realisieren. Die Zeitangaben werden dann über eine Blockkette bereitgestellt. Dadurch ist die Information vorzugsweise dezentral verfügbar. Vorzugsweise stellt der Primär-Zeitgeber Zusatzinformationen über die verwendeten Zeitquellen als Teil der entsprechenden Transaktionen oder als Zusatztransaktionen bereit.

Diese Zusatzinformationen können sich insbesondere auf die eine oder mehreren verwendete Zeitquellen (z.B. GPS, Galileo Open Service, Galileo PRS Service), auf die technische Realisierung des verwendeten lokalen Zeitquelle (z.B. Temperatur-kompensierter Quarzoszillator, Chip-Scale Atomic Clock CSAC, reguläre Atomuhr), eine Genauigkeitsinformation (z.B. absolut, z.B. +/- 1 Sekunde, Ganggenauigkeit, z.B. 0,01s/24h) beziehen bzw. diese angeben.

Weiterhin kann beispielsweise das Zeitsystem angegeben werden (z.B. UTC, GPS System Time, Galileo System Time).

Weiterhin prüft vorzugsweise der Primär-Zeitgeber, nach welcher Verzögerung ein Glied (oder Block genannt) in der Blockkette enthalten ist, der eine der Transaktionen (z. B. eine Realtime Assertion Transaktion oder eine (Echt)zeit Assertion Transaktion) umfasst. Abhängig von der ermittelten Verzögerung wird eine Zusatzinformation bereitgestellt (z.B. Mittelwert/Erwartungswert der Verzögerung (Delay), Varianz der Verzögerung (Delay)).

Ein Client/Rechner synchronisiert vorzugsweise seine lokale Zeitinformation (z. B. lokale Echtzeituhr, lokale Uhr) unter Verwendung der sicherheitsgeschützten Zeitangabe einer Blockkette.

In einer weiteren Variante stellt er dazu eine eigene Transaktion in die Blockkette ein, zu der er seine lokale Zeitinformation speichert (bzw. in der Transaktion abgelegt hat). Wenn diese Transaktion des Clients in einem bestätigten Glied der Blockkette auftaucht, wobei dieses Glied eine Transaktion (vorzugsweise mit einer sicherheitsgeschützten Zeitangabe) des Primär-Zeitgebers umfasst, so ermittelt der Client eine entsprechende Zeitversatzinformation bzw. Verzögerung abhängig von seiner eigenen, zwischengespeicherten Zeitinformation/Zeitangabe und der sicherheitsgeschützten Zeitangabe der Transkation des Primär-Zeitgebers. Abhängig davon kann er insbesondere seine lokale Zeitinformation bzw. seinen lokalen Zeitgeber (z. B. Echtzeituhr, Uhr) nachstellen (z.B. schneller oder langsamer stellen) oder die lokale Zeitinformation als ungültig kennzeichnen (bei zu großer Abweichung).

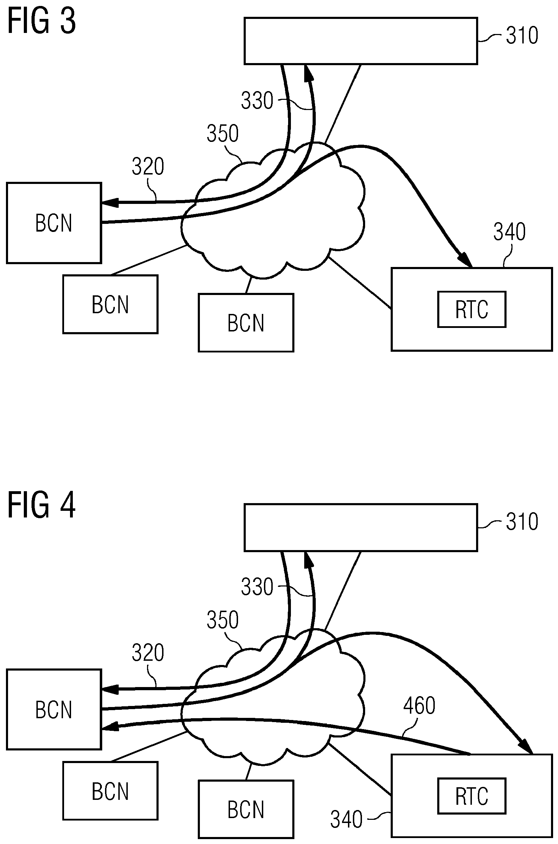

Die Fig. 3 zeigt ein drittes Ausführungsbeispiel der Erfindung, das beispielsweise ein Verfahren, so wie es in Fig. 1 und Fig. 2 erläutert ist, realisiert.

Im Einzelnen zeigt die Fig. 3 ein beispielhaftes System mit mehreren Knoten BCN der Blockkette, die eine Blockkette realisieren (z. B. Bitcoin-Knoten oder Ethereum-Knoten). Die Pfeile stellen möglichen Informationsfluss dar. Da es sich bei einer Blockkette um eine dezentrale, verteilte Datenbank handelt, ist vorzugsweise die Kommunikation mit einem der Mehrzahl von gleichartigen Knoten der Blockkette (oder kurz Blockkettenknoten) über ein Netzwerk 350 (z. B. ein LAN, WAN oder das Internet) möglich. Ein erfindungsgemäßer (Primär-) Zeitgeber 310 (z. B. auch Blockchain-Realtime-Oracle genannt), der insbesondere das erfindungsgemäße Verfahren zum Bereitstellen sicherheitsgeschützter Zeitangaben (z. B. in Fig. 1 erläutert) realisiert, stellt eine Zeitangabe mittels einer Transaktion (z. B. eine Echtzeit-Bestätigungs-Transaktion) 320 mit einer Zeitbestätigungsinformation, insbesondere zur Bestätigung der Zeitangabe, in die Blockkette ein. Dies erfolgt vorzugsweise wiederholt, insbesondere periodisch.

Diese umfasst vorzugsweise Zusatzinformation zur eigentlichen Zeitangabe. Vorzugsweise sind mehrere Glieder der Blockkette hierfür vorgesehen. Ein bestimmter Knoten 340 (auch RTC-Knoten) kann die in einer Blockkette enthaltene Echtzeit-Bestätigungs-Transkation(en) 330 verwenden, um seine lokale Echtzeituhr (RTC, real time clock) anzupassen. Dazu werden Konfigurationsparameter der Echtzeituhr angepasst (aktuelle Zeitinformation/Zeitangabe, Gang-Geschwindigkeitskorrekturparameter).

Die Fig. 4 zeigt ein viertes Ausführungsbeispiel der Erfindung, das beispielsweise ein Verfahren so wie es in Fig. 1 und Fig. 2 erläutert ist, realisiert bzw. eine Variante zum Ausführungsbeispiel der Fig. 3.

Das Ausführungsbeispiel unterscheidet sich zu dem Ausführungsbeispiel von Fig. 3 dadurch, dass der bestimmte Knoten 340 (auch RTC-Knoten genannt), der seine Echtzeituhr synchronisieren möchte, eine sicherheitsgeschützte Zeitangabe (z. B. in einer der Transkationen in Form einer Zeitsynchronisations-Transaktion (TimeSync-Transaction)) 460 in die Blockkette einfügt. Diese kann z. B. einen Nonce-Wert (z. B. eine kryptographische Nonce), einen Zählerwert, ein Zufallswert oder den Wert der Echtzeituhr umfassen. Der RTC-Knoten 340 speichert weiterhin vorzugsweise lokal seine lokale Echtzeituhr-Uhrzeitinformation (z. B. die Uhrzeit und/oder der Typ der Echtzeituhr) und/oder Zusatzinformationen zu diesem Zeitpunkt ab. Dann wartet der RTC-Knoten, bis seine Zeitsynchronisations-Transaktion 460 in einem bestätigten Glied der Blockkette enthalten ist.

Weiterhin ermittelt er vorzugsweise die Zeitangabe der Echtzeit-Bestätigungs-Transaktion des (Primär-)Zeitgebers, die in dem gleichen Glied umfasst/enthalten ist.

In einer Variante wird die Zeitangabe in einem benachbarten Glied oder in benachbarten Gliedern berücksichtigt, wobei beispielsweise maximal eine vorgegebene Anzahl bis zum benachbarten Glied (z. B. es wird bis maximal das fünfte benachbarte Glied (einzeln) berücksichtigt) oder der benachbarten Glieder ((z. B. es wird bis maximal das fünfte benachbarte Glied (gemittelt) berücksichtigt) berücksichtigt wird. Mit anderen Worten, wird beispielsweise ein maximal zulässiger Glied-Abstand festgelegt, bis zu dem benachbarten Glied/er berücksichtigt werden. Bei den benachbarten Gliedern handelt es sich insbesondere um erfolgreich validierte bzw. bestätigte Glieder der Blockkette.

Daraufhin ermittelt RTC-Knoten 340 die Differenz zwischen seiner lokalen Echtzeitinformation (zwischengespeichert oder in TimeSync-Transaktion enthalten) und der der Echtzeit-Bestätigungs-Transaktion. Davon abhängig werden Konfigurationsparameter (z. B. Konfigurationsparameter der Echtzeituhr) aktualisiert (z. B. wird die Echtzeituhr vor- oder zurückgestellt, oder es wird die Ganggeschwindigkeitskorrektur erhöht oder verringert).

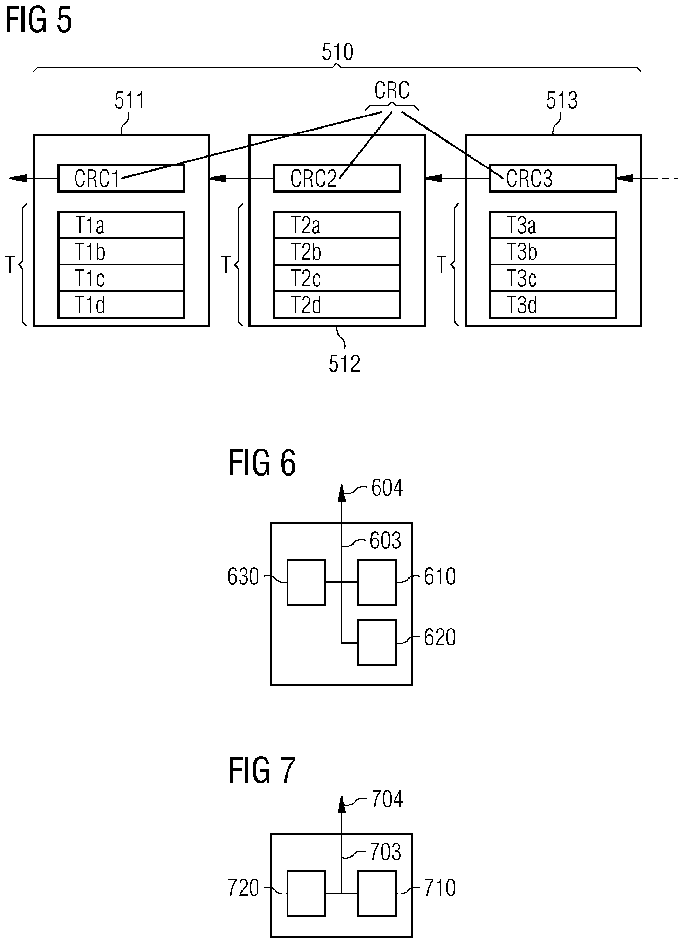

Die Fig. 5 zeigt ein fünftes Ausführungsbeispiel der Erfindung in Form einer Blockkette, die zur Realisierung der vorhergehenden Ausführungsbeispiele geeignet ist.

Im Einzelnen zeigt die Fig. 5 die Glieder 510, beispielsweise ein erstes Glied 511, ein zweites Glied 512 und ein drittes Glied 513, einer Blockkette.

Die Glieder 510 umfassen jeweils mehrere Transaktionen T. Das erste Glied 511 umfasst beispielsweise eine erste Transaktion T1a, eine zweite Transaktion T1b, eine dritte Transaktion T1c und eine vierte Transaktion T1d. Das zweite Glied 512 umfasst beispielsweise eine fünfte Transaktion T2a, eine sechste Transaktion T2b, eine siebte Transaktion T2c und eine achte Transaktion T2d. Das dritte Glied 513 umfasst beispielsweise eine neunte Transaktion T3a, eine zehnte Transaktion T3b, eine elfte Transaktion T3c und eine zwölfte Transaktion T3d.

Die Glieder 510 umfassen jeweils zusätzlich noch eine Verkettungsprüfsumme CRC, die abhängig vom direkten Vorgänger-Glied gebildet wird. Somit umfasst das erste Glied 511 eine erste Verkettungsprüfsumme CRC1 von seinem Vorgänger-Glied, das zweite Glied 512 eine zweite Verkettungsprüfsumme CRC2 vom ersten Glied 511, und das dritte Glied 513 eine dritte Verkettungsprüfsumme CRC3 vom zweiten Glied 512. Die Verkettungsprüfsumme wird vorzugsweise über den Glied-Header des entsprechenden Vorgängergliedes gebildet. Die Verkettungsprüfsumme CRC können vorzugsweise unter Verwendung einer kryptographischen Hash-Funktion wie z.B. SHA-256, KECCAK-256 oder SHA-3 gebildet werden.

Zusätzlich kann jedes der Glieder eine Transaktions-Prüfsumme umfassen. Diese kann mittels eines Hash-Baumes realisiert werden.

Um den Hash-Baum zu bilden, wird für jede Transaktion eines Gliedes eine dritte/weitere Prüfsumme (z. B. ebenfalls ein Hash-Wert, der abhängig von den Transaktionen/Transaktionsdatensätzen gebildet wird) berechnet.

Üblicherweise wird ein Hash-Baum, z. B. ein Merkle Tree oder Patricia Tree, verwendet, dessen Wurzel-Hash-Wert/Wurzel-Prüfsumme vorzugsweise als Transaktions-Prüfsumme in dem jeweiligen Glied hinterlegt wird.

In einer Variante wird die Transaktions-Prüfsumme als Verkettungsprüfsumme verwendet.

Ein Glied kann weiterhin einen Zeitstempel, eine digitale Signatur, einen Proof-of-Work-Nachweis aufweisen, so wie es in den Ausführungsformen der Erfindung erläutert wurde.

Mit anderen Worten zeigt Fig. 5 eine Blockkette, die dazu geeignet ist, insbesondere das erfindungsgemäße Verfahren zu realisieren. Ein Glied (z. B. eine Datenstruktur) umfasst zumindest einen Hash-Wert (z. B. die Verkettungs-Prüfsumme), der abhängig vom Vorgänger-Glied gebildet ist. Außerdem umfasst ein Glied eine Information zu mehreren Transaktionen (z. B. ebenfalls ein Hash-Wert (z. B. eine Transaktions-Prüfsumme), der abhängig von den Transaktionen gebildet wird).

Eine Transaktion kann einen Programmcode als Smart Contract enthalten. Der Programmcode gibt insbesondere an, welche Transaktionen zulässig sind. Dadurch lassen sich unterschiedliche Geschäftsabläufe durch eine gemeinsame Blockkette bzw. Blockketten-Infrastruktur (ein System mit mehreren Knoten wie in Fig. 3 oder Fig. 4) flexibel realisieren. Beispielsweise wird für die Transaktionsprüfsumme eines Gliedes ein Hash-Baum, z. B. ein Merkle Tree oder Patricia Tree, verwendet, dessen Wurzel-Hash-Wert in einem Glied hinterlegt wird. Ein Glied kann weiterhin beispielsweise einen Zeitstempel, eine digitale Signatur, einen Proof-of-Work-Nachweis aufweisen (ein Proof-of-Work-Nachweis ist die Lösung zu einer rechenintensiven Aufgabe, die Abhängig vom Glied-Inhalt zu lösen ist; eine solche rechenintensive Aufgabe wird auch als kryptographisches Puzzle bezeichnet).

Zum besseren Verständnis der Erfindung wird eine mögliche Verwendung der in Fig. 5 dargestellten Blockkette zusammen mit der Erfindung nun genauer erläutert. Es wird nur eine beispielhafte Realisierung der Blockkette erläutert und die konkret verwendeten Daten dieser Erläuterung dienen nur dem Verständnis und sollen nicht als Einschränkung der Erfindung verstanden werden.

Im Einzelnen ist die erste Transaktion T1a eine Zahlungstransaktion, so wie diese z. B. von Bitcoin bekannt ist.

Die zweite Transaktion T1b ist eine Transaktion zur Übertragung von Besitzrechten, so wie diese z. B. von Bitcoin bekannt ist.

Die dritte Transaktion T1c ist eine Echtzeit-Bestätigungs-Transkation (wie z. B. in Fig. 3 erläutert) des (Primär-)Zeitgebers. Die dritte Transaktion T1c umfasst eine erste Zeitangabe (z. B. 20170111143107 für 11.1.2017, 14:31:07) und Zusatzinformationen über das Zeitsystem (z. B. UTC, d.h. die GPS-Zeit wurde bereits in UTC-Zeit umgerechnet), eine Varianz der Zeitangabe (z. B. 17 Sekunden), den Typ der Zeitquelle (z. B. GPS) und eine Knoten-Prüfsumme des (Primär-)Zeitgebers (z. B. eine digitale Signatur).

Die fünfte Transaktion T2a ist eine Zahlungstransaktion, so wie diese z. B. von Bitcoin bekannt ist.

Die sechste Transaktion T2b ist eine Zeitsynchronisations-Transaktion (TimeSync-Transaction) des RTC-Knoten (siehe vorhergehende Ausführungsbeispiele). Die sechste Transaktion T2b umfasst einen ersten Wert der Echtzeituhr des RTC-Knoten (z. B. 20170111143417) und eine Knoten-Prüfsumme (z. B. eine digitale Signatur eines RTC-Knoten wie in Fig.4).

Die siebte Transaktion T2c ist eine weitere Zeitsynchronisations-Transaktion (TimeSync-Transaction) des RTC-Knoten. Die siebte Transaktion T2c umfasst einen Nonce-Wert (z. B. eine kryptographische Nonce) basierend auf einem Zufallswert und eine Knoten-Prüfsumme (z. B. eine digitale Signatur eines RTC-Knoten wie in Fig.4).

Die neunte Transaktion T3a ist eine weitere Zeitsynchronisations-Transaktion (TimeSync-Transaction) des RTC-Knoten (z. B. ein RTC-Knoten wie in Fig.4). Diese umfasst einen Nonce-Wert (z. B. eine kryptographische Nonce basierend auf einem Zufallswert), einen Zählerwert, einen Zufallswert, einen zweiten Wert der Echtzeituhr des RTC-Knoten (z. B. 20170111143718) und eine Knoten-Prüfsumme (z. B. eine digitale Signatur eines RTC-Knoten wie in Fig.4).

Die zehnte Transaktion T3b ist eine weitere Echtzeit-Bestätigungs-Transkation (wie z. B. in Fig. 3 erläutert) des (Primär-)Zeitgebers. Die zehnte Transaktion T3b umfasst eine zweite Zeitangabe (z. B. 20170111143739) und Zusatzinformationen über das Zeitsystem (z. B. UTC), eine Varianz der Zeitangabe (z. B. 17 Sekunden), den Typ der Zeitquelle (z. B. GPS) und eine Knoten-Prüfsumme des (Primär-)Zeitgebers (z. B. eine digitale Signatur).

Die restlichen Transaktionen aus Fig. 5 sind für die weitere Betrachtung unwichtig und werden nicht weiter erläutert.

Im Einzelnen umfasst die Blockkette nun mehrere Glieder mit unterschiedlichen Transaktionen unterschiedlicher Knoten. Ein Glied enthält mehrere Transaktionen, z. B. auch zu Bezahlvorgängen oder zur Zuordnungsänderung des Besitzers eines Objekts.

Erfindungsgemäß ist zumindest eine Echtzeit-Bestätigungs-Transaktion ((Real)time-Assertion-Transaction), wie z. B. die dritte Transaktion T1c, enthalten. Die Echtzeit-Bestätigungs-Transaktionen können auch weitere Zusatzinformationen umfassen wie z.B. einen Identifier (SVID, Space Vehicle ID) der empfangenen, für die Zeitbestimmung/Zeitquelle verwendeten GPS-Satelliten, eine jeweilige Empfangssignalstärke, ein verwendetes Frequenzband (z.B. L1, L2, L5), ein verwendeter Code (z.B. P(Y)-Code oder M-Code), detektierte Reflektionen oder Störer (Jammer). Bei Verwendung des Galileo Satellitennavigationssystems zur Zeitbestimmung könnte z. B. auch der verwendete Galileo-Dienst, z. B. Open Service, Commercial Service, oder PRS-Service, angegeben werden.

Es sind somit insbesondere sicherheitsgeschützte Zeitangaben in Form von Zeitsynchronisations-Transaktionen in den Transaktionen T enthalten, z. B. die neunte Transaktion T3a, die sechste Transaktion T2b oder die siebte Transaktion T2c, vorhanden. Diese können beispielsweise auch jeweils eine lokale Zeitinformation und/oder eine Nonce (z.B. ein Zufallswert) enthalten.

Das dritte Glied 513 umfasst damit sowohl eine Zeitsynchronisations-Transaktion wie auch eine Echtzeit-Bestätigungs-Transaktion.

Der RTC-Knoten, der die Zeitsynchronisations-Transaktion eingestellt/eingefügt hat, kann die Zeitdifferenz/Verzögerung zwischen der in diesem Glied attestierten Zeitinformation/Zeitangabe der zehnten Transaktion T3b (z. B. 20170111143718) des Primär-Zeitgebers und dem ersten Wert der Echtzeituhr des RTC-Knoten (z. B. 20170111143739) der neunten Transkation T3a ermitteln. In diesem Beispiel geht die lokale Uhr des RTC-Knoten insbesondere 21 Sekunden nach gegenüber dem Primär-Zeitgeber bzw. der zehnten Transaktion T3b des Primär-Zeitgebers. Abhängig von der Verzögerung, und ggf. von weiteren Parametern wie der bestätigten Varianz der zehnten Transaktion T3b, kann der entsprechende RTC-Knoten beispielsweise einen Konfigurationsparameter seiner lokalen Echtzeituhr anpassen.

Falls der RTC-Knoten eine Zeitsynchronisations-Transaktion (mit einer sicherheitsgeschützten Zeitangabe) eingestellt hat, jedoch diese in einem Glied der Blockkette eingefügt wird, die keine Echtzeit-Bestätigungs-Transaktion enthält, (z. B. das zweite Glied 512) so kann der betroffene Knoten einen Zeitpunkt für dieses Glied beispielsweise abhängig von der bestätigten Zeitangabe zurückliegender und/oder nachfolgender Glieder schätzen. In diesem Beispiel könnte für das zweite Glied 512 z. B. als Schätzwert 20170111143423 ermitteln, in dem er einen Mittelwert zwischen den bestätigten Zeitinformation(en)/Zeitangabe(n) des Vorgängergliedes 14:31:07 (erstes Glied 511 und der Zeitangabe der dritten Transaktion T1c), und des Nachfolgegliedes 14:37:39 (drittes Glied 513, zehnte Transaktion T3b). Anhand dieser beiden Werte kann der RTC-Knoten eine Zeitdifferenz von 00:06:32 ermitteln. Nun kann der RTC-Knoten anhand dieser Werte einen Schätzwert für eine Zeitangabe für das zweite Glied 512 bzw. für die sechste und siebte Transaktion ermitteln: 14:31:07 + 00:06:32 / 2 = 14:31:07 + 00:03:16 = 14:34:23.

Insbesondere kann die Blockkette beispielsweise eine Vielzahl von Gliedern umfassen, von denen jeweils nur ein Teil oder einige eine Transaktion mit einer sicherheitsgeschützten Zeitangabe umfassen, wie z. B. eine Zeitsynchronisations-Transaktion, (Echt-)Zeit-Bestätigungs-Transaktion (eine durch die Blockkette bestätigte (Echt-)Zeitinformation bzw. Zeitangabe) oder Zeitsynchronisations-Transaktion.

Insbesondere kann anhand der zumindest in manchen oder allen Gliedern enthaltenen Zeitbestätigungs-Transaktionen bzw. sicherheitsgeschützten Zeitangaben ggf. auch zu einem späteren Zeitpunkt geschätzt werden, zu welchem Zeitpunkt eine beliebige Transaktion eines Gliedes (z.B. Besitzübergang, Bezahlvorgang) erfolgt ist.

Die Fig. 6 zeigt ein sechstes Ausführungsbeispiel der Erfindung als (Primär-)Zeitgeber zum rechnergestützten Bereitstellen sicherheitsgeschützter Zeitangaben.

Der Zeitgeber umfasst eine oder mehrere Zeitquellen, ein Erfassungsmodul 610, ein Speichermodul 620, ein Erstellungsmodul 630 und eine optionale erste Kommunikationsschnittstelle 604, die über einen ersten Bus 603 kommunikativ miteinander verbunden sind.

Der Zeitgeber kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 603 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Erfassungsmodul 610 ist zum Erfassen von ersten Zeitangaben von der einen oder den mehreren Zeitquellen eingerichtet.

Das Erfassungsmodul 610 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die ersten Zeitangaben erfasst werden.

Das Speichermodul 620 ist zum Speichern von Transaktionen eingerichtet, wobei
- die Transaktionen die ersten Zeitangaben umfassen und/oder
- erste Prüfsummen für ersten Zeitangaben berechnet werden und die Transaktionen die ersten Prüfsummen umfassen

Das Speichermodul 620 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Transaktionen gespeichert werden.

Das Erstellungsmodul 630 ist zum Erstellen der sicherheitsgeschützten Zeitangaben durch ein Erzeugen von Gliedern einer Blockkette eingerichtet, wobei die Glieder jeweils mindestens eine der Transaktionen umfassen und die Glieder miteinander zu der Blockkette verkettet werden.

Das Erstellungsmodul 630 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die sicherheitsgeschützten Zeitangaben erstellt werden.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Die Fig. 7 zeigt ein siebtes Ausführungsbeispiel der Erfindung als Vorrichtung zum rechnergestützten Synchronisieren einer Uhr eines Rechners.

Die Vorrichtung umfasst ein Kommunikationsmodul 710, ein Konfigurationsmodul 720, und eine optionale zweite Kommunikationsschnittstelle 704, die über einen zweiten Bus 703 kommunikativ miteinander verbunden sind.

Der Zeitgeber kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den zweiten Bus 703 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das Kommunikationsmodul 710 ist zum Empfangen oder Abrufen mindestens einer erfindungsgemäßen sicherheitsgeschützten Zeitangabe (bzw. durch das entsprechende erfindungsgemäße Verfahren erstelle sicherheitsgeschützte Zeitangabe) eingerichtet, wobei das Glied einer Blockkette eine Transaktion umfasst, welche die sicherheitsgeschützte Zeitangabe aufweist.

Das Kommunikationsmodul 710 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die sicherheitsgeschützte Zeitangabe empfangen oder abgerufen wird.

Das Konfigurationsmodul 720 ist zum Einstellen der Uhr anhand der sicherheitsgeschützten Zeitangabe eingerichtet.

Das Konfigurationsmodul 720 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Uhr eingestellt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 Dezember 1978,
[3] Ross Anderson "Security Engineering. A Guide to Building Dependable Distributed Systems" Wiley, 2001

## Patentansprüche

1. Verfahren zum rechnergestützten Bereitstellen von sicherheitsgeschützten Zeitangaben mit folgenden Verfahrensschritten:
- Erfassen (110) von ersten Zeitangaben von einer oder mehrerer Zeitquellen;
- Speichern (120) von Transaktionen, wobei
- die Transaktionen die ersten Zeitangaben umfassen und/oder
- erste Prüfsummen für die ersten Zeitangaben berechnet werden und die Transaktionen die ersten Prüfsummen umfassen;
- Erstellen (130) der sicherheitsgeschützten Zeitangaben durch ein Erzeugen von Gliedern einer Blockkette, wobei
- die Glieder jeweils mindestens eine der Transaktionen umfassen,
- die Glieder miteinander zu der Blockkette verkettet werden.

2. Verfahren nach Anspruch 1, wobei die Glieder über eine kryptographische Hashfunktion (H) miteinander verkettet werden.

3. Verfahren nach Anspruch 1 oder 2, wobei die eine oder mehreren Zeitquellen eine GPS-Zeitquelle und/oder eine Galileo-Zeitquelle und/oder Glonass-Zeitquelle und/oder Beidou-Zeitquelle und/oder DCF77-Zeitquelle und/oder Atomic Clock-Zeitquelle ist und wobei vorzugsweise zumindest ein Teil der Transaktionen oder Zusatztransaktionen eine erste Zusatzinformation über die Zeitquelle umfassen.

4. Verfahren nach einem der vorhergehenden Ansprüche, wobei zumindest ein Teil der Transaktionen oder Zusatztransaktionen jeweils eine zweite Zusatzinformation umfassen, die einen Typ der Zeitquelle angeben.

5. Verfahren nach einem der vorhergehenden Ansprüche, wobei zumindest ein Teil der Transaktionen oder Zusatztransaktionen jeweils eine dritte Zusatzinformation umfassen, die eine Genauigkeit der sicherheitsgeschützten Zeitangaben angeben.

6. Verfahren nach einem der vorhergehenden Ansprüche, wobei zumindest ein Teil der Transaktionen oder Zusatztransaktionen jeweils eine vierte Zusatzinformation umfassen, die ein Zeitsystem der sicherheitsgeschützen Zeitangaben angeben.

7. Verfahren nach einem der vorhergehenden Ansprüche, wobei eine erste Zeitdauer ermittelt wird, die angibt mit welcher Verzögerung die sicherheitsgeschützte Zeitangaben in die Blockkette eingefügt werden, wobei zumindest ein Teil der Transaktionen oder Zusatztransaktionen jeweils die erste Zeitdauer als fünfte Zusatzinformation umfassen.

8. Verfahren nach einem der vorhergehenden Ansprüche, wobei anhand eines vorgegebenen zeitlichen Intervalls, eines vorgegebenen Zeitrasters oder durch einen Trigger jeweils eine der sicherheitsgeschützten Zeitangaben als jeweils eine der Transaktionen in jeweils eines der Glieder in die Blockkette eingefügt wird.

9. Verfahren nach einem der vorhergehenden Ansprüche, wobei die Glieder an mindestens einen Rechner übertragen oder von einem Rechner abgerufen werden.

10. Verfahren nach Anspruch 9, wobei der mindestens eine Rechner seine lokale Zeitinformation anhand sicherheitsgeschützter Zeitangaben der Blockkette synchronisiert.

11. Verfahren nach einem der vorhergehenden Ansprüche, wobei die sicherheitsgeschützten Zeitangaben durch einen oder mehrere Zeitgeber bereitgestellt werden.

12. Verfahren zum Synchronisieren einer Uhr eines Rechners mit dem Verfahrensschritten:
- Empfangen oder Abrufen (210) mindestens einer sicherheitsgeschützten Zeitangabe nach einem der Ansprüche 1-11, wobei das Glied einer Blockkette eine Transaktion umfasst, welche die sicherheitsgeschützte Zeitangabe aufweist;
- Einstellen (220) der Uhr anhand der sicherheitsgeschützten Zeitangabe.

13. Zeitgeber zum rechnergestützten Bereitstellen sicherheitsgeschützter Zeitangaben aufweisend:
- eine oder mehrere Zeitquellen;
- ein Erfassungsmodul (610) zum Erfassen von ersten Zeitangaben von der einen oder den mehreren Zeitquellen;
- ein Speichermodul (620) zum Speichern (120) von Transaktionen, wobei
- die Transaktionen die ersten Zeitangaben umfassen und/oder
- erste Prüfsummen für die ersten Zeitangaben berechnet werden und die Transaktionen die ersten Prüfsummen umfassen;
- ein Erstellungsmodul (630) zum Erstellen der sicherheitsgeschützten Zeitangaben durch ein Erzeugen von Gliedern einer Blockkette, wobei
- die Glieder jeweils mindestens eine der Transaktionen umfassen,
- die Glieder miteinander zu der Blockkette verkettet werden.

14. Zeitgeber nach Anspruch 13, wobei der Zeitgeber ein Übermittlungsmodul zum Übermitteln sicherheitsgeschützter Zeitangaben aufweist.

15. Vorrichtung zum Synchronisieren einer Uhr eines Rechners aufweisend:
- ein Kommunikationsmodul (710) zum Empfangen oder Abrufen mindestens einer sicherheitsgeschützten Zeitangabe nach einem der Ansprüche 1-11, wobei das Glied einer Blockkette eine Transaktion umfasst, welche die sicherheitsgeschützte Zeitangabe aufweist;
- ein Konfigurationsmodul (720) zum Einstellen der Uhr anhand der sicherheitsgeschützten Zeitangabe.

16. Computerprogrammprodukt mit Programmbefehlen zur Durchführung der Verfahren nach einem der Ansprüche 1 - 11 oder des Verfahrens nach Anspruch 12.

17. Computerprogrammprodukt mit Programmbefehlen für ein Erstellungsgerät, das mittels der Programmbefehle konfiguriert wird, den Zeitgeber nach Anspruch 13 oder 14 und/oder eine Vorrichtung nach Anspruch 15 zu erstellen.

18. Bereitstellungsvorrichtung für das Computerprogrammprodukt nach Anspruch 16 und/oder 17, wobei die Bereitstellungsvorrichtung das Computerprogrammprodukt speichert und/oder bereitstellt.
